# FASCICULE DE BREVET EUROPEEN

(11) **EP 0 518 727 B1**
(45) Date de publication et mention de la délivrance du brevet: **14.06.1995**
(21) Numéro de dépôt: 92401500.1
(22) Date de dépôt: 02.06.1992
(51) Int. Cl.: C01D 3/16

(54) **Procédé de purification d'une solution aqueuse de chlorure de métal alcalin par enlèvement de l'ammonium et de l'iode**
Verfahren zur Reinigung von wässerigen Alkalimetallchloridlösungen durch Entfernung von Ammonium und Jod
Process for purifying an aqueous alkali meta chloride solution by removing ammonium and iodine

(30) Priorité: 10.06.1991 FR 9107011
(43) Date de publication de la demande: 16.12.1992
(73) Titulaire: ELF ATOCHEM S.A., 92800 Puteaux (FR)
(72) Inventeur: Delmas, François, F-69110 St Foy Les Lyon (FR)

(56) Documents cités:
- EP-A- 0 399 588
- RESEARCH DISCLOSURE, K. Mason Pub., Emsworth, GB Vol. 307 (Nov. 1989), page 795 J. T. KEATING ET AL. : "Treatment of iodide containing brines for use in membrane chlor alkali electrolysis cells"

## Description

La présente invention concerne un procédé de purification d'une solution aqueuse de chlorure de métal alcalin par enlèvement de l'ammonium et de l'iode.

On effectue aussi simultanément la destruction de l'ammonium par oxydation en azote moléculaire suivi d'un dégazage.

Les solutions aqueuses de chlorure de sodium sont électrolysées pour fabriquer le chlore.

Quand on effectue l'électrolyse selon le procédé dit "à membranes" il est nécessaire de purifier soigneusement la solution aqueuse pour enlever les impuretés habituelles dans le chlorure de sodium telles que le calcium, le magnésium et les sulfates. On utilise par exemple des précipitations par le carbonate de sodium puis des absorptions sur résines, de tels procédés sont décrits dans ULLMANN'S ENCYCLOPEDIA OF INDUSTRIAL CHEMISTRY Vol A6-1986-page 448. Selon ses origines la solution de chlorure de sodium peut aussi contenir de l'iode sous forme iodure I⁻.

Le brevet US 4483754 explique que la présence d'iode dans une solution aqueuse de chlorure de sodium dans un procédé à membranes conduit à une dégradation rapide des membranes. Selon cet art antérieur l'iode présente dans la solution aqueuse sous forme iodure (degré d'oxydation -1) est oxydée sous forme d'iode moléculaire (degré d'oxydation 0) puis cette iode moléculaire est enlevée de la solution aqueuse de chlorure soit par absorption sur charbon actif ou sur résine anionique soit par stripping à l'air dans une colonne. Les exemples montrent qu'on peut obtenir ainsi une solution aqueuse de chlorure de sodium contenant 0,8 ppm (ex 1) et 0,7 ppm (ex 3) exprimée en iode dans la suite du text ppm designé mg/kg. Dans cet art antérieur cette purification en iode est considérée comme suffisante.

La demande de brevet EP 399588 décrit un procédé d'épuration d'une solution aqueuse de chlorure de sodium dans lequel on oxyde les iodures en iode moléculaire qu'on adsorbe sur une résine échangeuse d'ions puis dans une étape suivante on oxyde les ions ammonium en azote moléculaire qu'on élimine de la solution par stripping à l'air.

On obtient ainsi une solution aqueuse de chlorure de sodium contenant entre 0,2 et 0,5 ppm d'iode. Il est bien écrit en colonne 2 lignes 24-26 qu'il convient d'éviter une oxydation excessive conduisant à la formation d'anions IO₃⁻ (degré d'oxydation 5).

La publication "Research Disclosure RD-30732, novembre 1989" explique que l'iode contenue dans les solutions aqueuses de chlorure de sodium, sous forme iodure, s'oxyde en périodate dans la cellule au cours de l'électrolyse, ce périodate précipite dans la membrane et l'endommage. Selon cette publication on ajoute du barium dans la solution avant l'électrolyse il se forme ainsi un précipité très fin fortement insoluble de périodate de barium.

La demanderesse a trouvé que cette solution n'était pas satisfaisante quand la quantité d'iode est importante parce que le précipité a tendance à s'accumuler dans la membrane et en réduit les performances. Il est donc nécessaire pour le procédé d'électrolyse à membranes de réduire autant que possible la quantité d'iode. Les arts antérieurs précédents qui montrent une élimination de l'iode doivent utiliser des résines. La demanderesse a maintenant trouvé qu'il était beaucoup plus simple et plus efficace d'oxyder l'iode en périodate puis d'éliminer par filtration ce périodate. On obtient ainsi une solution aqueuse de chlorure de sodium contenant au plus 0,1 ppm d'iode qu'on peut électrolyser sans endommager les membranes de la cellule d'électrolyse.

La présente invention est donc un procédé de purification d'une solution aqueuse de chlorure de métal alcalin contenant de l'iode dans lequel on oxyde l'iode jusqu'au degré d'oxydation 7 c'est-à-dire sous forme de périodate, puis qu'on élimine le périodate.

L'oxydation de l'iode, c'est-à-dire de l'iodure de l'iode ou de l'iodate s'effectue à tout pH avec du chlore actif. Pour oxyder par le chlore actif il suffit d'injecter dans la solution du chlore, de l'eau de chlore ou un hypochlorite tel que de l'eau de javel. On peut suivre l'oxydation par une mesure de potentiel d'oxydo-réduction. La quantité d'agent oxydant doit être au moins légèrement supérieure à la stoechiométrie pour oxyder l'iodure en périodate. En fait un large excès par rapport à cette stoechiométrie est préférable pour oxyder les autres composés présents dans la saumure et possédant un pouvoir réducteur vis-à-vis de l'oxydant. Cette oxydation peut se faire à la température ambiante mais pour avoir une réaction plus rapide il est préférable d'opérer au-moins à 60°C. La cinétique d'oxydation de l'iode en périodate est rapide. Il est préférable d'oxyder à plus de 40°C pour augmenter la vitesse de formation d'un précipité de l'iode au degré d'oxydation 7. A 60°C, après quelques minutes le précipité désiré se forme. De préférence on attendra entre 20 et 90 mn pour une efficacité correcte.

Selon le procédé de l'invention l'iode est oxydée sous forme d'ion IO₄⁻ c'est-à-dire sous forme périodate. Pour obtenir la précipitation la plus complète possible du périodate il est préférable d'être en milieu basique et de préférence à un pH compris entre 11 et 13. Le pH peut être ajusté par un agent basique tel que la soude. L'addition de l'agent oxydant et de l'agent basique peut s'effectuer dans un ordre quelconque.

Il est préférable que la solution aqueuse de chlorure de métal alcalin contienne au-moins un cation barium, calcium, strontium ou magnésium pour former le périodate. On effectue donc le traitement de purification en iode sur la solution aqueuse brute de chlorure de métal alcalin c'est-à-dire avant d'avoir enlevé le calcium, magnésium, etc... selon les purifications conventionnelles décrites dans l'art antérieur ULLMAN'S. On peut aussi effectuer la purification de l'invention après les purifications conventionnelles en calcium, magnésium, pourvu qu'on ait effectué ces traitements au carbonate de barium. Il reste ainsi des cations barium dans la solution aqueuse de chlorure alcalin. L'élimination du périodate peut s'effectuer par une simple filtration, une décantation ou tout moyen équivalent ou toute combinaison de ces moyens.

Après le traitement de l'invention et si la solution aqueuse de chlorure de métal alcalin doit passer sur des résines ou tout matériau sensible au chlore actif, il est conseillé de détruire l'excès éventuel d'agent oxydant. Cette destruction est une opération connue en soi, on peut utiliser le SO₂.

L'invention concerne aussi un procédé dans lequel en plus de l'iode on élimine l'ammonium. La solution aqueuse peut aussi contenir des cations ammonium. Il est prudent d'éliminer l'ammonium dissous pour éviter la formation de NCl₃ produit instable pouvant se décomposer avec violence. On oxyde l'ammonium en azote moléculaire puis on élimine l'azote par dégazage en mettant la solution sous vide ou en strippant dans une colonne avec un gaz inerte ou de l'air. Cette oxydation est connue en soi, elle s'effectue à un pH inférieur à 10 et de préférence entre 6 et 10. Selon une forme préférée de l'invention l'oxydation de l'ammonium et de l'iode s'effectue simultanément. Il suffit de se placer dans les conditions de pH de l'oxydation de l'ammonium puisque ce sont les plus contraignantes.

Il est avantageux d'utiliser un seul agent oxydant pour l'iode et l'ammonium. On utilise avantageusement le chlore actif.

La quantité de chlore actif pour détruire l'ammonium est avantageusement supérieure à la stoechiométrie et de préférence comprise entre 1,5 et 2,5 fois la stoechiométrie. Ensuite on dégaze l'azote puis on ajuste le pH par addition d'un agent basique, par exemple la soude pour provoquer la précipitation du périodate, on opère alors comme précédemment.

### Exemple 1 :

Une saumure à 300 g/l de NaCl contient :
- 20 mg/l de Mg
- 1,2 g/l de Ca
- 0,12 mg/l de Ba
- 0,7 mg/l d'iode

4cm3 de javel à 12,5 % sont ajoutés à 200 cm3 de saumure de pH12 ; la solution est alors agitée pendant 2 h à température ambiante.

Après filtration sur filtre Millipore (Marque Commerciale ; 0,22 »m), la teneur en iode n'est plus que de 0,5 ppm.

### Exemple 2 :

Il est identique à l'exemple 1, excepté quele traitement s'effectue à 60°C.

La teneur finale en iode est de 0,1 mg/l.

### Exemple 3 :

Une saumure de même composition que dans l'exemple précédent est doptée à 1,9 mg/l en iode. Après un traitement à 60°C pendant 1h, à pH = 12,5 la teneur en iode du filtrat est de 0,1 mg/l.

### Exemple 4 :

Une saumure à 300 g/l de même composition que l'exemple précédent est dopée à 24 mg/l de NH₃. Dans 200 cm³ de saumure on introduit 4 cm³ de javel à 12,5 %, le pH est porté à 10. Après 1/4 d'heure d'agitation à 60°C, la solution est basifiée et maintenue à pH = 12 pendant 1 heure.

Après filtration, la saumure ne contient plus que 0,1 mg/l d'iode et l'azote ammoniacale a été détruite à 100%.

## Revendications

1. Procédé de purification d'une solution aqueuse de chlorure de métal alcalin contenant de l'iode et, éventuellement de l'ammonium dans lequel on oxyde l'iode jusqu'au degré d'oxydation 7, c'est-à-dire sous forme de périodate, puis qu'on élimine le périodate, avant de soumettre la dite solution a l'electrolyse.

2. Procédé selon la revendication 1 caractérisé en ce qu'on oxyde l'iode avec du chlore actif et de préférence de l'hypochlorite.

3. Procédé selon la revendication 1 ou 2 caractérisé en ce que l'élimination du périodate s'effectue par précipitation en milieu basique.

4. Procédé selon l'une des revendications 1 à 3 caractérisé en ce qu'on effectue simultanément l'oxydation de l'iode et l'oxydation de l'ammonium en azote moléculaire.

5. Procédé selon la revendication 4 caractérisé en ce qu'on effectue l'oxydation avec du chlore actif et de préférence de l'hypochlorite.

## Claims

1. Method for purification of an aqueous alkali metal chloride solution containing iodine and optionally ammonium, in which the iodine is oxidised to the oxidation state 7, that is to say in the periodate form, then the periodate is removed, before subjecting the said solution to electrolysis.

2. Method according to Claim 1, characterised in that the iodine is oxidised with active chlorine and preferably hypochlorite.

3. Method according to Claim 1 or 2, characterised in that the removal of the periodate is carried out by precipitation in basic medium.

4. Method according to one of Claims 1 to 3, characterised in that the oxidation of iodine and the oxidation of ammonium to molecular nitrogen are carried out simultaneously.

5. Method according to Claim 4, characterised in that the oxidation is carried out with active chlorine and preferably hypochlorite.

## Patentansprüche

1. Verfahren zur Reinigung einer wäßrigen, jod- und gegebenenfalls ammoniumhaltigen Alkalimetallchloridlösung, wobei Jod bis zur Oxidationsstufe 7, d.h. zum Perjodat oxidiert wird und anschließend das Perjodat vor der Elektrolyse der Lösung entfernt wird.

2. Verfahren nach Anspruch 1, dadurch gekennzeichnet, daß Jod mit aktivem Chlor und vorzugsweise Hypochlorit oxidiert wird.

3. Verfahren nach Anspruch 1 oder 2, dadurch gekennzeichnet, daß das Perjodat durch Fällung in basischem Medium entfernt wird.

4. Verfahren nach einem der Ansprüche 1 bis 3, dadurch gekennzeichnet, daß die Oxidation von Jod und die Oxidation von Ammonium zu molekularem Stickstoff gleichzeitig durchgeführt wird.

5. Verfahren nach Anspruch 4, dadurch gekennzeichnet, daß die Oxidation mit aktivem Chlor und vorzugsweise mit Hypochlorit durchgeführt wird.
